# EUROPEAN PATENT APPLICATION

(11) **EP 0 972 634 A2**
(43) Date of publication of application: **19.01.2000**
(21) Application number: 99113463.6
(22) Date of filing: 13.07.1999
(51) Int. Cl.: B32B 27/32

(54) **Laminate, multi-layer container and sealed container**

(30) Priority: 14.07.1998 JP 19901298; 24.08.1998 JP 23618298; 12.02.1999 JP 3432399; 15.02.1999 JP 3516999; 25.02.1999 JP 4913099; 26.03.1999 JP 8468499; 06.07.1999 JP 19237999; 06.07.1999 JP 19238099
(71) Applicant: SUMITOMO BAKELITE CO., LTD., Tokyo 140-0002 (JP)
(72) Inventor: Mori, Haruhiko, Sumitomo Bakelite Co., Ltd., Tokyo 140-0002 (JP); Ohsima, Takayuki, Sumitomo Bakelite Co., Ltd., Tokyo 140-0002 (JP); Akazawa, Seigo, Sumitomo Bakelite Co., Ltd., Tokyo 140-0002 (JP)
(74) Representative: Türk - Gille - Hrabal - Struck

(57) **Abstract**

A laminate of synthetic resins comprising at least four layers comprising layer (A) of a polyolefin resin, layer (B) of an adhesive resin, layer (C) of a barrier resin to oxygen gas and layer (E) of an ethylene terpolymer resin, wherein the thickness of layer (A) of a polyolefin resin is 50% or more of the thickness of the entire laminate of synthetic resins, the thickness of layer (B) of an adhesive resin is 3 µm or more, the thickness of layer (C) of a barrier resin to oxygen gas is 5 µm or more, the thickness of layer (E) of an ethylene terpolymer resin is in the range of 5 to 60 µm and the adhesive strength between layer (E) of an ethylene terpolymer resin and paper substrate (G) is 150 g/15 mm width or more; a multi-layer container comprising the laminate and a paper substrate; and a sealed container comprising a cap sealed to the multi-layer container.

The laminate exhibits an excellent molding property to enable deep drawing in production of a multi-layer container having a paper substrate as the outer layer, excellent impact strength, great adhesive strength with the paper substrate, an excellent barrier property to oxygen gas and an excellent property of preserving flavor and can be advantageously used as a packaging material for foods which allows easy detachment of sealed portions. The multi-layer container and the sealed container have the same advantageous properties.

## Description

### BACKGROUND OF THE INVENTION

### 1. Field of the Invention

The present invention relates to a laminate, a multi-layer container and a sealed container. More particularly, the present invention relates to a laminate which exhibits an excellent molding property to enable deep drawing in production of a multi-layer container having a paper substrate as the outer layer, excellent impact strength, great adhesive strength with the paper substrate, an excellent barrier property to oxygen gas and an excellent property of preserving flavor and can be advantageously used as a packaging material for foods which allows easy detachment of sealed portions; a multi-layer container comprising the laminate and the paper substrate; and the sealed container comprising the multi-layer container and a cap sealed to the multi-layer container.

### 2. Description of the Related Arts

To decrease material consumption and protect the environment, products of synthetic resins, particularly products for packaging in which great amounts of synthetic resins are used, are recently required to have smaller volumes and to facilitate disposal thereof.

Heretofore, various proposals have been made on composite containers in which films or sheets of synthetic resins are adhered to a paper substrate such as a paper board so that the printing property and the property to hold a shape exhibited by the paper substrate and the sealing property exhibited by the films or sheets of synthetic resins are simultaneously exhibited. For example, containers having a shape of a tray which can be built from blanks made of a paper board coated with a synthetic resin are proposed. The blanks are folded in a overlapped form at corner portions so that end portions of the blanks are not exposed and thus liquid materials can be contained. In recent years, people often eat alone due to the change in the eating habits and cooked or intermediately cooked foods are widely used. Simpler methods of cooking such as heating by a microwave range or an electric oven are desired. Packaging containers are often used as table wares. Therefore, improvements in heat resistance, impact resistance and sealing property are increasingly desired. In the above methods of using blanks coated with synthetic resins, resin layers have a thickness of several micrometers to several tens micrometers at most and the prepared products can hardly satisfy the recent requirements for improved heat resistance and impact resistance.

In Japanese Utility Model Publication No. Showa 51(1976)-31202, a sealed container which bears beautifully colored prints on the outer case and enables complete sealing at the corners is proposed. This sealed container is composed of an outer case which is made of thick paper and has a slit at a lower portion and an inner case which is made of a film of a synthetic resin and integrally formed at the inside of the outer case by removing the air between the outer case and the film though the slit. In Japanese Utility Model Publication No. Showa 54(1979)-42830, a container which can be sealed completely and surely with a thin plastic film and has no protruded edge portions is proposed. This container is composed of an outer case which is made of a paper board and has a flap around edge portions of an opening and a plastic film which is tightly adhered to the inside of the outer case and has outer peripheral portions folded at the end portions of the flap to the outside and tightly adhered. However, these containers has a drawback in that, when a film of a synthetic resin softened by heat is brought into integral adhesion to an outer case of a paper substrate by vacuum molding or the like, a resin at the surface of the film to be adhered to the paper substrate is cooled at the time of contact with the paper substrate and a sufficient adhesive strength is not obtained. Therefore, the film is peeled when a cap is detached.

In Japanese Patent Application Laid-Open No. Heisei 10(1998)-114342, a sealed paper container which can be sealed at a low temperature after the container is packed with a content and shows excellent properties for sealing and opening is proposed. This container comprises a paper container having a flange around an opening, a polypropylene film or a film having a layer of polypropylene and a layer of a copolymer of ethylene having carbonyl group which is formed at the inside of the paper container by vacuum molding or the like and a cap which has a sealing layer made of polyethylene or a copolymer of ethylene and α-olefin prepared by polymerization in the presence of a single site catalyst and is sealed to the flange of the paper container by heating. This container has an excellent heat resistance due to the polypropylene film used as the inner layer of the container and excellent adhesion due to the copolymer of ethylene having carbonyl group disposed at the face of the film adhered to the paper substrate. However, this container has a drawback in that, because the copolymer of ethylene having carbonyl group has a specific gravity greater than that of polypropylene and a poor tensile strength in the softened condition, the film softened by heat during vacuum molding or air pressure molding flows downward in a greater amount and thickness of the film in the molded product tends to become uneven. Therefore, it is difficult to obtain an excellent product.

### SUMMARY OF THE INVENTION

An object of the present invention is to provide a laminate which exhibits an excellent molding property to enable deep drawing in production of a multi-layer container having a paper substrate as the outer layer, excellent impact strength, great adhesive strength with the paper substrate, an excellent barrier property to oxygen gas and an excellent property of preserving flavor and can be advantageously used as a packaging material for foods which allows easy detachment of sealed portions; a multi-layer container comprising the laminate and a paper substrate; and a sealed container comprising the multi-layer container and a cap sealed to the multi-layer container.

As the result of intensive studies by the present inventors to overcome the above problems, it was found that a laminate of synthetic resins comprising at least four layers comprising layer (A) of a polyolefin resin, layer (B) of an adhesive resin, layer (C) of a barrier resin to oxygen gas and layer (E) of an ethylene terpolymer resin, wherein the thickness of layer (A) of a polyolefin resin is 50% or more of the thickness of the entire laminate of synthetic resins, the thickness of layer (B) of an adhesive resin is 3 µm or more, the thickness of layer (C) of a barrier resin to oxygen gas is 5 µm or more, the thickness of layer (E) of an ethylene terpolymer resin is in the range of 5 to 60 µm and an adhesive strength between layer (E) of an ethylene terpolymer resin and paper substrate (G) is 150 g/15 mm width or more has an excellent molding property and an excellent barrier property to oxygen gas and can be advantageously used as a packaging material for foods. The present invention has been completed on the basis of this knowledge.

The present invention provides:
(1) A laminate of synthetic resins comprising at least four layers comprising layer (A) of a polyolefin resin, layer (B) of an adhesive resin, layer (C) of a barrier resin to oxygen gas and layer (E) of an ethylene terpolymer resin, wherein a thickness of layer (A) of a polyolefin resin is 50% or more of a thickness of the entire laminate of synthetic resins, a thickness of layer (B) of an adhesive resin is 3 µm or more, a thickness of layer (C) of a barrier resin to oxygen gas is 5 µm or more, a thickness of layer (E) of an ethylene terpolymer resin is in a range of 5 to 60 µm and an adhesive strength between layer (E) of an ethylene terpolymer resin and paper substrate (G) is 150 g/15 mm width or more as measured by 180 degree peeling at a peeling speed of 300 mm/min;
(2) A laminate described in (1), which further comprises layer (D) of an impact resistant resin having a thickness of 5 µm or more;
(3) A laminate described in (1), which further comprises layer (F) of a resin for preserving flavor;
(4) A laminate described in (1), wherein the barrier resin to oxygen gas forming layer (C) has a coefficient of oxygen permeation of 20 cc·100 µm/m²·atm·day or less at 23°C in 65% RH;
(5) A laminate described in (2), wherein the impact resistant resin forming layer (D) is a polyamide resin;
(6) A laminate described in (1), wherein layer (A) of a polyolefin resin comprises a resin layer for sealing which can be easily detached, the resin layer for sealing comprises a sealing layer comprising a mixture of 20 to 90% by weight of a polyethylene resin and 10 to 80% by weight of a polypropylene resin and a ratio of a melt flow rate of the polyethylene resin to a melt flow rate of the polypropylene resin is 0.5 to 20;
(7) A laminate described in (1), which has a structure comprising at least four layers comprising layer (A) of a polyolefin resin, layer (B) of an adhesive resin, layer (C) of a barrier resin to oxygen gas and layer (E) of an ethylene terpolymer resin which are laminated in an order of layers (A), (B), (C) and (E);
(8) A laminate described in (2), which has a structure comprising at least five layers comprising layer (A) of a polyolefin resin, layer (B) of an adhesive resin, layer (C) of a barrier resin to oxygen gas, layer (D) of an impact resistant resin and layer (E) of an ethylene terpolymer resin which are laminated in an order of layers (A), (B), (C), (D) and (E) or in an order of layers (A), (B), (D), (C) and (E);
(9) A laminate described in (3), which has a structure comprising at least five layers comprising layer (F) of a resin for preserving flavor, layer (A) of a polyolefin resin, layer (B) of an adhesive resin, layer (C) of a barrier resin to oxygen gas and layer (E) of an ethylene terpolymer resin which are laminated in an order of layers (F), (A), (B), (C) and (E);
(10) A multi-layer container comprising a laminate described in any of (1) to (9) as an inner layer and paper substrate (G) as an outer layer, wherein layer (E) of an ethylene terpolymer resin in the laminate and paper substrate (G) are adhered together and the laminate and paper substrate (G) are formed to a shape of the container; and
(11) A sealed container comprising a cap having a barrier property to oxygen gas and a multi-layer container described in Claim 10, wherein the cap is sealed to the laminate of the multi-layer container at peripheral portions of an opening of the multi-layer container.

### DESCRIPTION OF THE PREFERRED EMBODIMENTS

The laminate of the present invention is a laminate of synthetic resins comprising at least four layers comprising layer (A) of a polyolefin resin, layer (B) of an adhesive resin, layer (C) of a barrier resin to oxygen gas and layer (E) of an ethylene terpolymer resin, wherein the thickness of layer (A) of a polyolefin resin is 50% or more of the thickness of the entire laminate of synthetic resins, the thickness of layer (B) of an adhesive resin is 3 µm or more, the thickness of layer (C) of a barrier resin to oxygen gas is 5 µm or more, the thickness of layer (E) of an ethylene terpolymer resin is in the range of 5 to 60 µm and an adhesive strength between layer (E) of an ethylene terpolymer resin and paper substrate (G) is 150 g/15 mm width or more as measured by 180 degree peeling at a peeling speed of 300 mm/min.

The polyolefin resin used in the present invention is not particularly limited. Examples of the polyolefin resin include low density polyethylene resins, linear low density polyethylene resins, high density polyethylene resins, polypropylene resins, polybutene resins and poly(4-methylpentene-1) resins. A single type or a combination of two or more types of the polyolefin resins can be used. Among these polyolefin resins, polypropylene is preferably used due to the excellent heat resistance. As the polypropylene resin, a homopolymer of propylene and a copolymer of propylene with various types of olefin can be used. It is preferable that the polypropylene resin has a melt index of 0.1 to 5 g/10 min as measured in accordance with the method of Japanese Industrial Standard K 6758. The molding property can be improved by mixing 3 to 20 parts by weight of a low density polyethylene resin or a high density polyethylene resin with 100 parts by weight of the polypropylene resin. Heat resistance can be improved by mixing a poly(4-methylpentene-1) resin or a cyclic polyolefin resin of a homopolymer type with the polypropylene resin. Impact resistance can be improved by mixing a rubber component or a thermoplastic elastomer with the polypropylene resin.

The adhesive resin used in the present invention is not particularly limited as long as the adhesive strength between layer (A) of a polyolefin resin and layer (C) of a barrier resin to oxygen gas can be enhanced. Examples of the adhesive resin include modified polyolefin resins which are modified by copolymerization or graft polymerization of maleic anhydride or the like compound to a polyolefin resin to provide the adhesive property. Polypropylene modified with maleic anhydride is preferably used.

It is preferable that the barrier resin to oxygen gas used in the present invention has a coefficient of oxygen permeation of 20 cc·100 µm/m²·atm·day or less at 23°C in 65% RH. Examples of resins having such a coefficient of oxygen permeation include barrier resins to gases such as ethylene-vinyl alcohol copolymers, nylon MXD6, amorphous polyamides, polyvinylidene chloride and polyesters.

As the ethylene-vinyl alcohol copolymer, resins containing 20 to 50% by mol of copolymerized ethylene are preferably used.

Nylon MXD6 is a polyamide resin obtained by polycondensation of meta-xylylenediamine and adipic acid. The process for producing nylon MXD6 is not particularly limited and can be prepared by using, as the raw materials, a combination of meta-xylylenediamine and adipic acid or combinations of various derivatives of meta-xylylenediamine such as meta-xylylenediamine hydrochloride and various derivatives of adipic acid such as halides and esters of adipic acid. A polyamide resin in which 90% by mol or more of the diamine unit is the unit of meta-xylylenediamine can be used alone or as a blend with other thermoplastic resins. For example, an amorphous polyamide resin may be blended to improve the molding property. Diamines other than meta-xylylenediamine and dicarboxylic acids other than adipic acid may be incorporated by copolymerization into the polyamide resin in which 90% by mol or more of the diamine unit is the unit of meta-xylylenediamine.

The amorphous polyamide resin is a material generally called amorphous nylon or transparent nylon and is a special type of nylon showing no or very slow crystallization of the polymer unlike linear aliphatic nylons such as nylon 6 and nylon 66. Examples of the amorphous polyamide resin include copolycondensates of terephthalic acid and trimethylhexamethylenediamine, copolycondensates of 2,2-bis(p-aminocyclohexyl)propane, adipic acid and azelaic acid, copolycondensates of bis(3-methyl-4-aminocyclohexyl)methane, isophthalic acid and ω-aminododecanoic acid, copolycondensates of diphenylmethane diisocyanate and a mixture of adipic acid, azelaic acid and isophthalic acid and copolycondensates of terephthalic acid, isophthalic acid and hexamethylenediamine.

The ethylene terpolymer resin used in the present invention is not particularly limited. It is preferable that the ethylene terpolymer resin is a copolymer of ethylene and a monomer having carbonyl group. Terpolymer resins of ethylene, an acrylic ester and maleic anhydride is more preferable due to excellent stability under heating and little smell. Other thermoplastic resins such as polyethylene resins and polypropylene resins may be blended with the ethylene terpolymer resins within the range that the adhesive strength is not adversely affected.

In the laminate of the present invention, the thickness of layer (A) of a polyolefin resin is 50% or more of the thickness of the entire laminate of synthetic resins. When the thickness of layer (A) of a polyolefin resin is less than 50% of the thickness of the entire laminate of synthetic resins, there is the possibility that the amount of the laminate which flows down by heat during molding increases to adversely affect the molding property and that thickness becomes uneven after adhesion to a paper substrate. The thickness of the laminate of the present invention is not particularly limited. When it is considered that the laminate is used as a film adhered to an outer case made of paper and the shape of the container is mainly held by the outer case, the thickness of the laminate is preferably 30 to 500 µm and more preferably 100 to 300 µm from the standpoint of the molding property and the cost of the product.

In the laminate of the present invention, the thickness of layer (B) of an adhesive resin is 3 µm or more and preferably 5 µm or more. The thickness of layer (C) of a barrier resin to oxygen gas is 5 µm or more. The thickness of layer (E) of an ethylene terpolymer resin is 5 to 60 µm. When the thickness of layer (B) of an adhesive layer is less than 3 µm, there is the possibility that excellent adhesive strength is not obtained in adhesion between layer (A) of a polyolefin resin and layer (C) of a barrier resin to oxygen gas and delamination takes places. When the thickness of layer (C) of a barrier resin to oxygen gas is less than 5 µm, there is the possibility that it becomes difficult to maintain an excellent gas barrier property. When the thickness of layer (E) of an ethylene terpolymer resin is less than 5 µm, there is the possibility that adhesive strength to the paper substrate decreases and an adhesive strength of 150 g/15 mm width or more is not obtained in the measurement by 180 degree peeling at a peeling speed of 300 mm/min. When the thickness of layer (E) of an ethylene terpolymer resin exceeds 60 µm, there is the possibility that the amount of the laminate which flows down by heat during molding increases and the molding property becomes inferior.

In the laminate of the present invention, the adhesive strength of layer (E) of an ethylene terpolymer resin with paper substrate (G) is 150 g/15 mm width or more as measured by 180 degree peeling at a peeling speed of 300 mm/min. When the adhesive strength of layer (E) of an ethylene terpolymer resin with paper substrate (G) is less than 150 g/15 mm width, there is the possibility that peeling between layer (E) of an ethylene terpolymer resin and paper substrate (G) takes place when the sealed container is opened.

It is preferable that the laminate of the present invention has a structure comprising at least four layers comprising layer (A) of a polyolefin resin, layer (B) of an adhesive resin, layer (C) of a barrier resin to oxygen gas and layer (E) of an ethylene terpolymer resin which are laminated in the order of layers (A), (B), (C) and (E). Occasionally, this structure will be expressed as (A)/(B)/(C)/(E) and other structures will be expressed similarly. The laminate of the present invention may have a modified structure comprising an increased number of layers in which desired layers are added at desired positions of the above basic structure, where necessary. Examples of the modified structures include (A)/(B)/(C)/(B)/(E), (A)/(E)/(B)/(C)/(B)/(E), (A)/(B)/(C)/(B)/(A)/(E) and (A)/(B)/(C)/(B)/(A)/(B)/(C)/(E). It is preferable that one of the outermost layers of the laminate is layer (A) of a polyolefin resin from the standpoint of adhesion with a cap and the other outermost layer is layer (E) of an ethylene terpolymer resin from the standpoint of adhesion with the paper substrate.

The laminate of the present invention may further comprise layer (D) of an impact resistant resin having a thickness of 5 µm or more. The impact resistant resin used in the present invention is not particularly limited. Polyamides such as nylon 6, nylon 66, nylon 11, nylon 12, nylon 69, nylon 612 and 6-66 nylon copolymers are preferably used. The presence of layer (D) of an impact resistant resin having a thickness of 5 µm or more provides the laminate with impact resistance and resistance to formation of pin holes. Thus, the container prepared by using the laminate has a sufficient impact resistance and damage of the container by impact such as that of dropping and formation of pin holes can be prevented.

When the laminate of the present invention comprises layer (D) of an impact resistant resin, it is preferable that the laminate has a structure comprising at least five layers comprising layer (A) of a polyolefin resin, layer (B) of an adhesive resin, layer (C) of a barrier resin to oxygen gas, layer (D) of an impact resistant resin and layer (E) of an ethylene terpolymer resin which are laminated in the order of layers (A), (B), (C), (D) and (E) or in the order of layers (A), (B), (D), (C) and (E). These basic structures may be similarly expressed as (A)/(B)/(C)/(D)/(E) and (A)/(B)/(D)/(C)/(E), respectively. The laminate of the present invention may have a modified structure comprising an increased number of layers in which desired layers are added at desired positions of the above basic structures, where necessary. Examples of the modified structures expressed similarly include (A)/(B)/(C)/(D)/(B)/(E), (A)/(E)/(B)/(C)/(B)/ (D)/(E), (A)/(B)/(C)/(B)/(D)/(B)/(A)/(E), (A)/(B)/(C)/(D)/(B)/(A)/(B)/(C)/(E), (A)/(B)/(D)/(C)/(B)/(E), (A)/(E)/(B)/(D)/(B)/(C)/(E), (A)/(B)/(D)/(B)/(C)/(B)/(A)/ (E) and (A)/(B)/(D)/(C)/(B)/(A)/(B)/(D)/(E).

The laminate of the present invention may further comprise layer (F) of a resin for preserving flavor. Examples of the resin for preserving flavor used in the present invention include polyethylene terephthalate, polycarbonate, ethylene-vinyl alcohol copolymers and cyclic polyolefins of a homopolymer type. It is preferable that layer (F) of a resin for preserving flavor has a thickness of 10 µm or more. When the laminate comprising this layer is used for packaging foods from which flavor is easily lost, flavor of the foods can be preserved for a long time without deterioration in quality due to layer (F) of a resin for preserving flavor having a thickness of 10 µm or more. When the laminate of the present invention comprises layer (F) of a resin for preserving flavor, it is preferable that the laminate of the present invention has a structure comprising at least five layers comprising layer (F) of a resin for preserving flavor, layer (A) of a polyolefin resin, layer (B) of an adhesive resin, layer (C) of a barrier resin to oxygen gas and layer (E) of an ethylene terpolymer resin which are laminated in the order of layers (F), (A), (B), (C) and (E). This basic structure may be similarly expressed as (F)/(A)/(B)/(C)/(E). The laminate of the present invention may have a modified structure comprising an increased number of layers in which desired layers are added at desired positions of the above basic structure, where necessary. Examples of the modified structures expressed similarly include (F)/(B)/(A)/(B)/(C)/(E), (F)/(B)/(A)/(B)/(C)/(B)/(A)/(E) and (F)/(B)/(A)/(B)/(C)/(B)/(A)/(B)/(E).

In the laminate of the present invention, layer (A) of a polyolefin resin may comprise a resin layer for sealing which can be easily detached (occasionally referred to as an easy-to-open resin layer, hereinafter), wherein the resin layer for sealing comprises a sealing layer comprising a mixture of 20 to 90% by weight of a polyethylene resin and 10 to 80% by weight of a polypropylene resin and the ratio of the melt flow rate of the polyethylene resin to the melt flow rate of the polypropylene resin is in the range of 0.5 to 20. The melt flow rate of the polyethylene resin and the polypropylene resin can be measured in accordance with the method of Japanese Industrial Standard K 7210. When the ratio of the melt flow rate of the polyethylene resin to the melt flow rate of the polypropylene resin is in the range of 0.5 to 20 and the content of the polyethylene resin in the mixture is in the range of 20 to 90% by weight, a suitable sealing strength can be obtained when a sealed container is prepared by sealing the container with a cap. Thus, damage of the sealed container during transportation can be prevented and the sealed cap can be easily detached by hands without causing accidents such as spilling the contents when the container is opened. It is preferable that the easy-to-open resin layer has a thickness of 1 to 200 µm. The easy-to-open resin layer may have a structure comprising a single layer consisting of a sealing layer alone or a laminate structure comprising a substrate layer such as a polyethylene layer and a polypropylene layer and a sealing layer laminated to the substrate layer. The substrate layer may contain, where necessary, a polyolefin modified with maleic anhydride or an ethylene-vinyl acetate copolymer to enhance the strength.

The process for producing the laminate of the present invention is not particularly limited. For example, the laminate may be produced by integrally forming layer (A) of a polyolefin resin, layer (B) of an adhesive resin, layer (C) of a barrier resin to oxygen gas, layer (E) of an ethylene terpolymer resin, layer (D) of an impact resistant resin which is optionally contained and layer (F) of a resin for preserving flavor which is optionally contained in accordance with the coextrusion process or by laminating layer (A) of a polyolefin resin, layer (B) of an adhesive resin, layer (C) of a barrier resin to oxygen gas, layer (E) of an ethylene terpolymer resin, layer (D) of an impact resistant resin which is optionally contained and layer (F) of a resin for preserving flavor which is optionally contained in accordance with a laminating process. As the laminating process, for example, the extrusion lamination process, the dry lamination process or the thermal lamination process can be used.

The multi-layer container of the present invention comprises the laminate of the present invention as the inner layer and paper substrate (G) as the outer layer. Layer (E) of an ethylene terpolymer resin in the laminate and paper substrate (G) are adhered together and the laminate and paper substrate (G) are formed to a shape of the container. The multi-layer laminate of the container thus formed has a structure in which at least five layers are laminated together in the order of layers (A), (B), (C), (D), (E) and (G).

The paper substrate used in the present invention is not particularly limited. For example, paper boards used for paper wares, white paper boards, yellow card boards, chip card boards, colored card boards and material paper for paper cups can be used.

The process for producing the multi-layer container of the present invention is not particularly limited. For example, the multi-layer container can be produced as follows: prints are made on the paper substrate where necessary; blanks are prepared by punching, placed in a mold and formed to the shaped of the container; and simultaneously with or after the forming of the blanks, the laminate of the present invention is heated and adhered to paper substrate (G) at layer (E) of an ethylene terpolymer resin of the laminate in accordance with the vacuum molding process, the air pressure molding process or the vacuum-air pressure molding process.

The sealed container of the present invention comprises a cap having a barrier property to oxygen gas and the multi-layer container of the present invention. The cap is sealed to layer (A) of a polyolefin resin of the multi-layer container.

The cap having a barrier property to oxygen gas used in the present invention is not particularly limited. A cap comprising a sealing layer, a barrier layer to oxygen gas and a substrate is preferably used. Examples of the resin forming the sealing layer include various types of polypropylene resins such as homopolymer, block copolymers and random copolymers of propylene; blends of polypropylene resins and polyethylene resins; ethylene-vinyl acetate copolymers; polypropylene resins modified with maleic anhydride; and mixtures of the above resins. Examples of the resin forming the barrier layer to oxygen gas include ethylene-vinyl alcohol copolymers, vinylidene chloride resins and polyesters and polyamides coated with aluminum or inorganic silica by vapor deposition. Examples of the resin forming the substrate include polyesters, polyamides, biaxially stretched polypropylene films and cellophane. The sealing layer, the barrier layer to oxygen gas and the substrate can be laminated together in accordance with the dry lamination process, the coextrusion process or the extrusion lamination process.

In the sealed container of the present invention, the cap having the barrier property to oxygen gas and layer (A) of a polyolefin resin of the multi-layer container can be sealed to each other as follows: the multi-layer container is placed in a mold; the cap is placed at the opening of the container and flange portions are pressed by a heated plate.

The laminate of the present invention has a great adhesive strength to the outer case of the paper substrate. When the container packed with a content and sealed by the cap is opened to use the content for cooking by heating using a microwave range or an oven, there is no possibility that the laminate is peeled from the outer case together with the cap or that the content is spilled. Unlike conventional containers, the container of the present invention has heat resistance sufficient for cooking using a microwave range. The container has an excellent impact resistance such that the container is not damaged even when the container has an impact such as that of dropping. The container has an excellent barrier property to oxygen gas and an excellent property of preserving flavor. Therefore, a content which has been cooked or intermediately cooked can be preserved for a long time.

To summarize the advantages of the present invention, the laminate of the present invention exhibits an excellent molding property, great adhesive strength with the paper substrate, excellent impact strength and an excellent barrier property to oxygen gas. The laminate is advantageously used for laminate products prepared by lamination to paper and containers prepared by shaping the laminate products. The multi-layer container prepared by adhering the laminate of the present invention to a paper substrate and shaping the obtained product and the sealed container prepared by sealing the multi-layer container with a cap having the barrier property to oxygen gas can be advantageously used as a packaging container for foods.

### EXAMPLES

The present invention will be described more specifically in the following with reference to examples. However, the present invention is not limited to the examples.

The resins used in Examples and Comparative Examples are as follows:

### (A) Polyolefin resins

Polypropylene resin 1: manufactured by GRAND POLYMER Co., Ltd.; NOBLEN J101TA; melting point: 160°C; melt index: 2.0.
Polypropylene resin 2: manufactured by SUMITOMO CHEMICAL Co., Ltd.; SUMITOMO NOBLEN FH1016.
Polypropylene resin 3: manufactured by NIPPON POLYCHEM Co., Ltd.; NOVATEK PP FY4.

Resin layer 1 for sealing which can be easily detached (easy-to-open resin layer 1): a laminate having a sealing layer and a substrate; the laminate made of a blend composed of 70% by weight of polypropylene (manufactured by SUMITOMO CHEMICAL Co., Ltd.; SUMITOMO NOBLEN FH1016; melt flow rate: 0.5) and 30% by weight of low density polyethylene (manufactured by SUMITOMO CHEMICAL Co., Ltd.; SUMIKATHENE F412-1; melt flow rate: 4.5) and having a thickness of 5 µm; and the substrate made of polypropylene (manufactured by SUMITOMO CHEMICAL Co., Ltd.; NOBLEN FH1016) and having a thickness of 100 µm.

Resin layer 2 for sealing which can be easily detached (easy-to-open resin layer 2): a laminate having a sealing layer and a substrate; the sealing layer made of high density polyethylene (manufactured by NIPPON POLYOLEFIN Co., Ltd.; JREX KF265A; melt flow rate: 0.5) and having a thickness of 5 µm; and the substrate made of polypropylene (manufactured by SUMITOMO CHEMICAL Co., Ltd.; NOBLEN FH1016) and having a thickness of 100 µm.

### (B) Adhesive resin

Adhesive resin 1: manufactured by NIPPON POLYOLEFIN Co., Ltd.; ADTEX ER313E; polypropylene modified with maleic anhydride.
Adhesive resin 2: manufactured by MITSUI CHEMICAL Co., Ltd.; ADMER QB550.

### (C) Barrier resin to oxygen gas

Barrier resin to oxygen gas 1: manufactured by KURARAY Co., Ltd.; EVAL J102B; an ethylene-vinyl alcohol copolymer.
Barrier resin to oxygen gas 2: manufactured by KURARAY Co., Ltd.; EVAL F101AZ; an ethylene-vinyl alcohol copolymer; coefficient of oxygen permeation: 0.4 cc·100 µm/m²·atm·day.
Barrier resin to oxygen gas 3: manufactured by MITSUBISHI GAS CHEMICAL Co., Ltd.; NYLON MXD6; MX nylon; coefficient of oxygen permeation: 1 cc·100 µm/m²·atm·day.

### (D) Impact resistant resin

Impact resistant resin 1: manufactured by UBE KOSAN Co., Ltd.; NYLON 5033B; 6-66 copolymer nylon.
Impact resistant resin 2: a blend of 80% by weight of a 6-66 copolymer nylon (manufactured by UBE KOSAN Co., Ltd.; NYLON 5033B) and 20% by weight of an amorphous nylon (manufactured by MITSUI DU PONT POLYCHEMICAL Co., Ltd.; SEALER PA3426).
Impact resistant resin 3: a blend of 50% by weight of polypropylene (manufactured by CHISSO PETROCHEMICAL Co., Ltd.; POLYPRO HT6001) and 50% by weight of polypropylene modified with maleic anhydride (manufactured by MITSUI CHEMICAL Co., Ltd.; ADMER QB550).

### (E) Ethylene terpolymer resin

An ethylene-acrylic ester-maleic anhydride terpolymer; manufactured by NIPPON POLYOLEFIN Co., Ltd.; REXPERL ET182; melting point: 98°C; melt index: 8.0.

### (F) Resin for preserving flavor

Resin for preserving flavor manufactured by EASTMAN CHEMICAL JAPAN Co., Ltd.; KODAL PETG6763.

### (G) Paper substrate

Material paper used for paper cups

In Examples 1 to 4 and Comparative Examples 1 to 4, the properties were evaluated in accordance with the following procedures. A laminate having a thickness of 160 µm was prepared in accordance with the coextrusion process and the coefficient of oxygen permeation of the prepared laminate was measured. The laminate was laminated to a paper substrate and the obtained laminate was formed into a container having a shape of a rectangular parallelepiped of 12 cm × 16 cm × 3.5 cm in a manner such that the paper substrate was placed at the outside of the container. The container was sealed with a cap of a thermoplastic laminate which was prepared by lamination of 50 µm of polypropylene, 15 µm of an ethylene-vinyl alcohol copolymer, 15 µm of nylon 6 and 12 µm of polyethylene terephthalate in accordance with the dry lamination process in a manner such that the sealing layer was placed first and a sealed container was prepared. The coefficient of oxygen permeation of the prepared container was measured.

In Examples 5 to 7 and Comparative Examples 5 to 7, the properties were evaluated in accordance with the following procedures. Frozen noodles were place in the container prepared above and a sealed container was prepared by sealing this container with the above cap of a thermoplastic laminate. Thirty sealed containers prepared in this manner were packed into a card board box and the card board box was dropped at a height of 1 m repeatedly 100 times at the room temperature. After the dropping test, the sealed containers were examined with respect to formation of pin holes. The bending test of the laminate was conducted in accordance with the method of MIL B-131G and the number of formed pin holes was counted.

In Examples 8 to 15 and Comparative Examples 8 and 9, the properties were evaluated in accordance with the following procedures. A laminate having a thickness of 200 µm was prepared in accordance with the coextrusion process and the coefficient of oxygen permeation of the prepared laminate was measured. The laminate was laminated to a paper substrate and the obtained laminate was formed into a container having a shape of a rectangular parallelepiped of 12 cm × 16 cm × 3.5 cm in accordance with the vacuum molding process in a manner such that the paper substrate was placed at the outside of the container. After the container was packed with curry roux, the container was sealed with a cap of a thermoplastic laminate which was prepared by lamination of 50 µm of polypropylene, 15 µm of an ethylene-vinyl alcohol copolymer, 15 µm of nylon 6 and 12 µm of polyethylene terephthalate in accordance with the dry lamination process in a manner such that the sealing layer was placed first and a sealed container was prepared. Thirty sealed containers prepared in this manner and containing curry roux were stored in a refrigerator for 1 week. The sealed containers were then packed into a card board box and the card board box was dropped at a height of 50 cm. After the dropping test, the sealed containers were examined with respect to formation of damages. The cap was detached to examine how easily the cap could be detached. The curry roux was also examined with respect to taste and flavor. The results of the examinations were evaluated in accordance with the following criteria. Test pieces having a width of 15 mm were prepared and the force required to detach the sealed portion was also measured.

### Impact resistance

- good:: no damage found in container after dropping
- poor:: damage found in container after dropping

### Property for detaching the sealed portion easily (occasionally, referred to as the easy-to-open property hereinafter)

- good:: easily detached
- poor:: not easily detached, occasionally accompanied with damage in the container or the cap

### Preservation of taste and flavor

- good:: no change in taste or flavor found
- poor:: change in taste or flavor found

In Examples 16 to 22 and Comparative Examples 10 to 16, the properties were evaluated in accordance with the following procedures. A laminate was prepared in accordance with the coextrusion process. The prepared laminate having a longer edge of 270 mm and a shorter edge of 250 mm was formed into a tray having a longer edge of 200 mm, a shorter edge of 150 mm and a depth of 20 mm using an air pressure molding machine of an indirect both faces heating type and integrally adhered to blanks of paper which were placed in the mold. In the molding, the laminate was heated at 160 to 180°C for 2 to 3 seconds and tightly adhered to the inside of the blanks of paper.

### (1) Molding property

The amount of the laminate which flowed down was measured during heating in the air pressure molding machine of an indirect both faces heating type using a guide gauge placed at the side of the film sample. When the amount is excessively great, the molding property was evaluated as poor.

### (2) Deviation in thickness

After a laminate was integrally adhered to blanks of paper as described above, the laminate was peeled off. The thickness of the laminate was measured and the deviation in thickness was calculated.

### (3) Adhesive strength

A test piece having a width of 15 mm was prepared and the 180 degree peeling test of a laminate adhered to a paper substrate was conducted at a speed of 300 mm/minute. The maximum load during the test was recorded as the adhesive strength.

### (4) Barrier property to oxygen gas

The coefficient of oxygen permeation of a laminate was measured in accordance with the OXTRAN method.

In Examples 23 to 29 and Comparative Examples 17 to 19, the properties were evaluated in accordance with the following procedures. A laminate was prepared in accordance with the coextrusion process. The prepared laminate having a longer edge of 270 mm and a shorter edge of 250 mm was formed into a tray having a longer edge of 200 mm, a shorter edge of 150 mm and a depth of 20 mm using an air pressure molding machine of an indirect both faces heating type and integrally adhered to blanks of paper which were placed in the mold. In the molding, the laminate was heated at 160 to 180°C for 2 to 3 seconds and tightly adhered to the inside of the blanks of paper.

### (1) Molding property

The amount of the laminate which flowed down was measured during heating in the air pressure molding machine of an indirect both faces heating type using a guide gauge placed at the side of the film sample. When the amount is excessively great, the molding property was evaluated as poor.

### (2) Impact resistance

Impact resistance was measured in accordance with the method of Japanese Industrial Standard K 7160.

### (3) Adhesive strength

A test piece having a width of 15 mm was prepared and the 180 degree peeling test of a laminate adhered to a paper substrate was conducted at a speed of 300 mm/minute. The maximum load during the test was recorded as the adhesive strength.

### (4) Barrier property to oxygen gas

The coefficient of oxygen permeation of a laminate was measured in accordance with OXTRAN method.

In Examples 30 to 35 and Comparative Examples 20 to 25, the properties were evaluated in accordance with the following procedures. A laminate having a thickness of 160 µm was prepared in accordance with the coextrusion process and the coefficient of oxygen permeation of the prepared laminate was measured. The laminate was laminated to a paper substrate and the obtained laminate was formed into a container having a shape of a rectangular parallelepiped of 12 cm × 16 cm × 3.5 cm in a manner such that the paper substrate was placed at the outside of the container. The container was then sealed with aluminum foil to prepare a sealed container and the coefficient of oxygen permeation of the prepared sealed container was measured. A sealed container packed with orange juice and sealed with aluminum foil and a sealed container packed with curry roux and sealed with aluminum foil were prepared. After these sealed containers were stored at the room temperature for one month, the sealed containers were opened and evaluated in accordance with the following criteria.

### (1) Preservation of flavor

To evaluate preservation of flavor of orange juice, the amount of limonene, which is a component of orange juice, adsorbed to the innermost layer was measured.
- good:: almost no adsorption
- fair:: slightly adsorbed
- poor:: markedly absorbed

Preservation of flavor of curry roux was evaluated by actually tasting.
- good:: no change in flavor
- fair:: slight change in flavor
- poor:: significant change in flavor with smell of plastics

### (2) Stability in storage

Stability in storage of orange juice was evaluated by measurement of the content of vitamin C and also by actually tasting.
- good:: almost no decrease in the amount of vitamin C good taste
- poor:: marked decrease in the amount of vitamin C change in taste found

Stability in storage of curry roux was evaluated by examination of the condition of oxidation of oil components and it was decided whether the curry roux was suitable as food.
- good:: almost no oxidation of oil components, suitable as food
- fair:: suitable as food but oxidation of oil components found
- poor:: marked oxidation of oil components, unpleasant smell, not suitable as food

### Example 1

A laminate having a structure in which 47 µm of layer (A) of polypropylene resin 1, 3 µm of layer (B) of adhesive resin 1, 15 µm of layer (C) of barrier resin to oxygen gas 1, 3 µm of layer (B) of adhesive resin 1, 25 µm of layer (A) of polypropylene resin 1 and 7 µm of layer (E) of an ethylene terpolymer resin were laminated in this order was prepared.

The prepared laminate had a coefficient of oxygen permeation of 0.5 cc/m²·atm·day.

### Examples 2 and 3

Laminates having the structures shown in Table 1 were prepared and evaluated.

### Comparative Examples 1 to 3

Laminates having the structures shown in Table 2 were prepared and evaluated.

### Example 4

Using the laminate prepared in Example 1, a sealed container was prepared. The prepared sealed container had a coefficient of oxygen permeation of 0.007 cc/package·atm·day.

### Comparative Example 4

Using the laminate prepared in Comparative Example 1, a sealed container was prepared. The prepared sealed container had a coefficient of oxygen permeation of 12 cc/package·atm·day.

The results of Examples 1 to 3 are shown in Table 1. The results of Comparative Examples 1 to 3 are shown in Table 2. The results of Example 4 and Comparative Example 4 are shown in Table 3.

**Table 1**

| | Resins constituting laminate | | Coefficient of oxygen permeation (cc/m²· atm·day) |
|---|---|---|---|
| | type | thickness (µm) | |
| Example 1 | A polypropylene resin 1 | 47 | 0.5 |
| | B adhesive resin 1 | 3 | |
| | C barrier resin to oxygen gas 1 | 15 | |
| | B adhesive resin 1 | 3 | |
| | A polypropylene resin 1 | 25 | |
| | E ethylene terpolymer resin | 7 | |
| Example 2 | A polypropylene resin 1 | 65 | 0.6 |
| | B adhesive resin 1 | 5 | |
| | C barrier resin to oxygen gas 1 | 15 | |
| | E ethylene terpolymer resin | 15 | |
| Example 3 | A polypropylene resin 1 | 40 | 0.4 |
| | B adhesive resin 1 | 3 | |
| | C barrier resin to oxygen gas 1 | 15 | |
| | B adhesive resin 1 | 3 | |
| | A polypropylene resin 1 | 27 | |
| | B adhesive resin 1 | 5 | |
| | E ethylene terpolymer resin | 7 | |

**Table 2**

| | Resins constituting laminate | | Coefficient of oxygen permeation (cc/m²· atm·day) |
|---|---|---|---|
| | type | thickness (µm) | |
| Comparative Example 1 | A polypropylene resin 1 | 47 | 1160 |
| | B adhesive resin 1 | 3 | |
| | A polypropylene resin 1 | 15 | |
| | B adhesive resin 1 | 3 | |
| | A polypropylene resin 1 | 25 | |
| | E ethylene terpolymer resin | 7 | |
| Comparative Example 2 | A polypropylene resin 1 | 65 | 1280 |
| | B adhesive resin 1 | 5 | |
| | A polypropylene resin 1 | 15 | |
| | E ethylene terpolymer resin | 15 | |
| Comparative Example 3 | A polypropylene resin 1 | 40 | 1090 |
| | B adhesive resin 1 | 3 | |
| | A polypropylene resin 1 | 15 | |
| | B adhesive resin 1 | 3 | |
| | A polypropylene resin 1 | 27 | |
| | B adhesive resin 1 | 5 | |
| | E ethylene terpolymer resin | 7 | |

**Table 3**

| | Laminate used for sealed container | Coefficient of oxygen permeation (cc/package·atm·day) |
|---|---|---|
| Example 4 | laminate of Example 1 | 0.007 |
| Comparative Example 4 | laminate of Comparative Example 1 | 12 |

As can be understood from comparison of the results shown in Table 1 and the results shown in Table 2, the coefficients of oxygen permeation of the laminates of Examples 1 to 3 having the layer of the barrier resin to oxygen gas were as small as about one 2,000th of the coefficients of oxygen permeation of the laminates of Comparative Examples 1 to 3 having no layers of the barrier resin to oxygen gas. As shown by the results in Table 3, when sealed containers were made from these laminates, the coefficients of the container of Example 4 were as small as about one 2,000th of the coefficients of the container of Comparative Example 4.

### Example 5

A laminate having a structure in which 35 µm of layer (A) of polypropylene resin 1, 3 µm of layer (B) of adhesive resin 1, 15 µm of layer (D) of impact resistant resin 1, 15 µm of layer (C) of barrier resin to oxygen gas 1, 28 µm of layer (B) of adhesive resin 1, 7 µm of layer (A) of polypropylene resin 1 and 7 µm of layer (E) of an ethylene terpolymer resin were laminated in this order was prepared.

A sealed container prepared using the above laminate did not show formation of pin holes in the dropping test. The above laminate did not show formation of pin holes in the bending test.

### Examples 6 and 7

Laminates having the structures shown in Table 4 were prepared and evaluated.

### Comparative Examples 5 to 7

Laminates having the structures shown in Table 5 were prepared and evaluated.

**Table 4**

| | Resins constituting laminate | | dropping test | bending test (number of pin holes) |
|---|---|---|---|---|
| | type | thickness (µm) | | |
| Example 5 | A polypropylene resin 1 | 35 | no pin holes | 0 |
| | B adhesive resin 1 | 3 | | |
| | D impact resistant resin 1 | 5 | | |
| | C barrier resin to oxygen gas 1 | 15 | | |
| | B adhesive resin 1 | 28 | | |
| | A polypropylene resin 1 | 7 | | |
| | E ethylene terpolymer resin | 7 | | |
| Example 6 | A polypropylene resin 1 | 65 | no pin holes | 0 |
| | B adhesive resin 1 | 5 | | |
| | D impact resistant resin 1 | 7 | | |
| | C barrier resin to oxygen gas 1 | 15 | | |
| | E ethylene terpolymer resin | 8 | | |
| Example 7 | A polypropylene resin 1 | 35 | no pinholes | 0 |
| | B adhesive resin 1 | 3 | | |
| | D impact resistant resin 1 | 5 | | |
| | C barrier resin to oxygen gas 1 | 15 | | |
| | B adhesive resin 1 | 5 | | |
| | A polypropylene resin 1 | 27 | | |
| | B adhesive resin 1 | 3 | | |
| | E ethylene terpolymer resin | 7 | | |

**Table 5**

| | Resins constituting laminate | | dropping test | bending test (number of pin holes) |
|---|---|---|---|---|
| | type | thickness (µm) | | |
| Comparative Example 5 | A polypropylene resin 1 | 47 | pin holes found | 4 |
| | B adhesive resin 1 | 3 | | |
| | C barrier resin to oxygen gas 1 | 15 | | |
| | B adhesive resin 1 | 3 | | |
| | A polypropylene resin 1 | 25 | | |
| | E ethylene terpolymer resin | 7 | | |
| Comparative Example 6 | A polypropylene resin 1 | 65 | pin holes found | 3 |
| | B adhesive resin 1 | 5 | | |
| | C barrier resin to oxygen gas 1 | 15 | | |
| | E ethylene terpolymer resin | 15 | | |
| Comparative Example 7 | A polypropylene resin 1 | 40 | pinholes found | 6 |
| | B adhesive resin 1 | 3 | | |
| | C barrier resin to oxygen gas 1 | 15 | | |
| | B adhesive resin 1 | 3 | | |
| | A polypropylene resin 1 | 27 | | |
| | B adhesive resin 1 | 5 | | |
| | E ethylene terpolymer resin | 7 | | |

As shown by the results in Table 4, the sealed containers of Examples 5 to 7 which were prepared using the laminates having the layer of the impact resistant resin showed formation of no pin holes at all and had excellent impact resistance. The laminates of Examples 5 to 7 showed formation of no pin holes in the bending test. In contrast, as shown by the results in Table 5, the sealed containers of Comparative Example 5 to 7 which were prepared using the laminates having no layers of an impact resistant resin showed formation of pin holes in the dropping test. The laminates of Comparative Examples 5 to 7 showed formation of pin holes in the bending test.

### Example 8

A laminate having a structure in which 7 µm of layer (B) of adhesive resin 1, 20 µm of layer (C) of barrier resin to oxygen gas 1, 7 µm of layer (B) of adhesive resin 1, 41 µm of layer (D) of impact resistant resin 3 and 20 µm of layer (E) of an ethylene terpolymer resin were laminated to 105 µm of layer (A) of easy-to-open resin layer 1 in this order was prepared in accordance with the extrusion lamination process. The prepared laminate had a coefficient of oxygen permeation of 0.5 cc/m²·atm·day.

### Examples 9 to 11

Laminates having the structures shown in Table 6 were prepared and evaluated.

### Comparative Example 8

A laminate having the structure shown in Table 7 was prepared and evaluated.

### Example 12

A sealed container was prepared using the laminate prepared in Example 8, packed with curry roux and stored in a refrigerator for one week. After the storage, the sealed container showed no damage in the dropping test. The sealed container could be opened easily. No change in the taste and flavor was found in the curry roux. The force required to detach the cap was 500 g per 15 mm width.

### Examples 13 to 15

Using the laminates prepared in Examples 9 to 11, sealed containers were prepared and evaluated in accordance with the same procedures as those conducted in Example 12.

### Comparative Example 9

Using the laminate prepared in Comparative Example 8, a sealed container was prepared and evaluated in accordance with the same procedures as those conducted in Example 11.

The results of Examples 8 to 11 are shown in Table 6. The results of Comparative Example 8 are shown in Table 7. The results of Examples 12 to 15 and Comparative Example 9 are shown in Table 8.

**Table 6**

| | Resins constituting laminate | | Coefficient of oxygen permeation (cc/m²·atm·day) |
|---|---|---|---|
| | type | thickness (µm) | |
| Example 8 | A easy-to-open resin layer 1 | 105 | 0.5 |
| | B adhesive resin 1 | 7 | |
| | C barrier resin to oxygen gas 1 | 20 | |
| | B adhesive resin 1 | 7 | |
| | D impact resistant resin 3 | 41 | |
| | E ethylene terpolymer resin | 20 | |
| Example 9 | A easy-to-open resin layer 1 | 105 | 0.6 |
| | B adhesive resin 1 | 7 | |
| | C barrier resin to oxygen gas 1 | 20 | |
| | B adhesive resin 1 | 7 | |
| | D impact resistant resin 2 | 10 | |
| | E ethylene terpolymer resin | 51 | |
| Example 10 | A easy-to-open resin layer 1 | 105 | 0.5 |
| | B adhesive resin 1 | 7 | |
| | C barrier resin to oxygen gas 1 | 20 | |
| | D impact resistant resin 2 | 15 | |
| | B adhesive resin 1 | 7 | |
| | D impact resistant resin 3 | 26 | |
| | E ethylene terpolymer resin | 20 | |
| Example 11 | A easy-to-open resin layer 2 | 105 | 0.5 |
| | B adhesive resin 1 | 7 | |
| | C barrier resin to oxygen gas 1 | 20 | |
| | B adhesive resin 1 | 7 | |
| | D impact resistant resin 3 | 41 | |
| | E ethylene terpolymer resin | 20 | |

**Table 7**

| | Resins constituting laminate | | Coefficient of oxygen permeation (cc/m²· atm·day) |
|---|---|---|---|
| | type | thickness (µm) | |
| Comparative Example 8 | A easy-to-open resin layer 2 | 105 | 700 |
| | D impact resistant resin 3 | 50 | |
| | E ethylene terpolymer resin | 45 | |

**Table 8**

| | Laminate used for sealed container | Coefficient of oxygen permeation (cc/package· atm·day) | impact resist-ance | easy-to-open property | force to detach cap (g/15mm width) | stability in storage |
|---|---|---|---|---|---|---|
| Example 12 | laminate of Example 8 | 0.007 | good | good | 500 | good |
| Example 13 | laminate of Example 9 | 0.007 | good | good | 500 | good |
| Example 14 | laminate of Example 10 | 0.007 | good | good | 500 | good |
| Example 15 | laminate of Example 11 | 0.007 | good | poor | 2000 | good |
| Comparative Example 9 | laminate of Comparative Example 8 | 12 | poor | poor | 2000 | poor |

As shown by the results in Tables 6 and 7, the laminates of Examples 8 to 11 had small coefficients of oxygen permeation and showed excellent barrier properties to oxygen gas. In contrast, the laminate of Comparative Example 8 having no layers of a barrier resin of oxygen gas had a great coefficient of oxygen permeation and showed a poor barrier property to oxygen gas. As shown by the results in Table 8, the coefficients of oxygen permeation of the sealed containers directly reflected the coefficients of oxygen permeation of the corresponding laminates. The sealed containers of Examples 12 to 15 prepared using the laminates of Examples 8 to 11 showed excellent barrier properties to oxygen gas.

It is also shown by the results in Table 8 that the sealed containers of Examples 12 to 15 showed excellent impact resistance and stability in storage of foods. In the sealed containers of Examples 12 to 14 prepared using the laminates having the layer of easy-to-open resin, which was the layer having the sealing layer made of a blend of polypropylene and a low density polyethylene, detachment of sealed portions required a suitable force and it is shown that these sealed containers had an excellent easy-to-open property.

### Example 16

A laminate having a structure in which 15 µm of layer (A) of polypropylene resin 2 (manufactured by SUMITOMO CHEMICAL Co., Ltd.; SUMITOMO NOBLEN FH1016), 5 µm of layer (B) of adhesive resin 2 (manufactured by MITSUI CHEMICAL Co., Ltd.; ADMER QB550), 5 µm of layer (C) of barrier resin to oxygen gas 2 (manufactured by KURARAY Co., Ltd.; EVAL F101AZ) and 5 µm of layer (E) of an ethylene terpolymer resin (manufactured by NIPPON POLYOLEFIN Co., Ltd.; REXPERL ET182) were laminated in this order was prepared in accordance with the extrusion lamination process. The prepared laminate was integrally laminated to an outer case of a paper substrate (material paper for paper cups) using an air pressure molding machine in a manner such that the layer of an ethylene terpolymer was brought into adhesion with the paper substrate.

The amount of the laminate which flowed down during molding was 2.1 cm. After the laminate was tightly adhered to the blanks of paper, the laminate showed a deviation in thickness of 2.6σ. The adhesive strength between the laminate and the paper substrate was 162 g/15 mm width. The coefficient of oxygen permeation of the laminate was 1.6 cc/m²·atm·day.

### Examples 17 to 21

Laminates having the structures shown in Table 9 were prepared and evaluated.

### Comparative Example 10

A laminate having a structure in which 15 µm of layer (A) of polypropylene resin 2 (manufactured by SUMITOMO CHEMICAL Co., Ltd.; SUMITOMO NOBLEN FH1016), 5 µm of layer (B) of adhesive resin 2 (manufactured by MITSUI CHEMICAL Co., Ltd.; ADMER QB550), 5 µm of layer (C) of barrier resin to oxygen gas 2 (manufactured by KURARAY Co., Ltd.; EVAL F101AZ) and 3 µm of layer (E) of an ethylene terpolymer resin (manufactured by NIPPON POLYOLEFIN Co., Ltd.; REXPERL ET182) were laminated in this order was prepared in accordance with the extrusion lamination process. The prepared laminate was integrally laminated to an outer case of a paper substrate (material paper for paper cups) using an air pressure molding machine in a manner such that the layer of an ethylene terpolymer was brought into adhesion with the paper substrate.

The amount of the laminate which flowed down during molding was 2.0 cm. After the laminate was tightly laminated to the blanks of paper, the laminate showed a deviation in thickness of 2.5σ. The adhesive strength between the laminate and the paper substrate was 142 g/15 mm width. The coefficient of oxygen permeation of the laminate was 0.7 cc/m²·atm·day.

### Comparative Examples 11 to 16

Laminates having the structures shown in Table 10 were prepared and evaluated.

The results of Examples 16 to 21 are shown in Table 9. The results in Comparative Examples 10 to 16 are shown in Table 10.

**Table 9**

| | Resins constituting laminate | | Amount flowed down during molding (cm) | Deviation in thickness (σ) | Adhesive strength (g/15 mm width | Coefficient of oxygen permeation (cc/m²· atm·day) |
|---|---|---|---|---|---|---|
| | type | thickness (µm) | | | | |
| Example 16 | A polypropylene resin 2 | 15 | 2.1 | 2.6 | 162 | 1.6 |
| | B adhesive resin 2 | 5 | | | | |
| | C barrier resin to oxygen gas 2 | 5 | | | | |
| | E ethylene terpolymer resin | 5 | | | | |
| Example 17 | A polypropylene resin 3 | 60 | 1.7 | 2.0 | 227 | 0.7 |
| | B adhesive resin 2 | 10 | | | | |
| | C barrier resin to oxygen gas 2 | 15 | | | | |
| | E ethylene terpolymer resin | 15 | | | | |
| Example 18 | A polypropylene resin 2 | 347 | 2.0 | 2.3 | 560 | 1.5 |
| | B adhesive resin 2 | 54 | | | | |
| | C barrier resin to oxygen gas 3 | 78 | | | | |
| | E ethylene terpolymer resin | 60 | | | | |
| Example 19 | A polypropylene resin 3 | 64 | 0.9 | 0.7 | 394 | 0.7 |
| | B adhesive resin 2 | 11 | | | | |
| | C barrier resin to oxygen gas 2 | 17 | | | | |
| | B adhesive resin 2 | 10 | | | | |
| | A polypropylene resin 3 | 63 | | | | |
| | E ethylene terpolymer resin | 35 | | | | |
| Example 20 | A propylene resin 3 | 56 | 2.4 | 2.7 | 172 | 2.1 |
| | B adhesive resin 2 | 5 | | | | |
| | C barrier resin to oxygen gas 3 | 100 | | | | |
| | B adhesive resin 2 | 5 | | | | |
| | A polypropylene resin 3 | 56 | | | | |
| | E ethylene terpolymer resin | 7 | | | | |
| Example 21 | A polypropylene resin 2 | 211 | 2.3 | 2.2 | 720 | 2.5 |
| | B adhesive resin 2 | 20 | | | | |
| | C barrier resin to oxygen gas 3 | 88 | | | | |
| | B adhesive resin 2 | 15 | | | | |
| | A polypropylene resin 2 | 210 | | | | |
| | E ethylene terpolymer resin | 41 | | | | |

**Table 10**

| | Resins constituting laminate | | Amount flowed down during molding (cm) | Deviation in thickness (σ) | Adhesive strength (g/15 mm width | Coefficient of oxygen permeation (cc/m²· atm·day) |
|---|---|---|---|---|---|---|
| | type | thickness (µm) | | | | |
| Comparative Example 10 | A polypropylene resin 2 | 15 | 2.0 | 2.5 | 142 | 0.7 |
| | B adhesive resin 2 | 5 | | | | |
| | C barrier resin to oxygen gas 2 | 5 | | | | |
| | E ethylene terpolymer resin | 3 | | | | |
| Comparative Example 11 | A polypropylene resin 3 | 58 | 1.8 | 1.9 | 218 | 3.8 |
| | B adhesive resin 2 | 9 | | | | |
| | C barrier resin to oxygen gas 2 | 1 | | | | |
| | E ethylene terpolymer resin | 16 | | | | |
| Comparative Example 12 | A polypropylene resin 2 | 344 | 6.9 | 7.8 | 571 | 37.1 |
| | B adhesive resin 2 | 52 | | | | |
| | E ethylene terpolymer resin | 70 | | | | |
| Comparative Example 13 | A polypropylene resin 3 | 32 | 6.7 | 8.9 | 399 | 0.8 |
| | B adhesive resin 2 | 21 | | | | |
| | C barrier resin to oxygen gas 2 | 16 | | | | |
| | A polypropylene resin 3 | 32 | | | | |
| | E ethylene terpolymer resin | 34 | | | | |
| Comparative Example 14 | A polypropylene resin 3 | 5 | 11.7 | 10.1 | 169 | 2.3 |
| | B adhesive resin 2 | 5 | | | | |
| | C barrier resin to oxygen gas 3 | 105 | | | | |
| | A polypropylene resin 3 | 5 | | | | |
| | E ethylene terpolymer resin | 9 | | | | |
| Comparative Example 15 | A polypropylene resin 2 | 60 | 6.9 | 5.7 | 424 | 2.6 |
| | B adhesive resin 2 | 30 | | | | |
| | C barrier resin to oxygen gas 3 | 81 | | | | |
| | A polypropylene resin 2 | 60 | | | | |
| | E ethylene terpolymer resin | 49 | | | | |
| Comparative Example 16 | A polypropylene resin 3 | 400 | 1.1 | 0.9 | 47 | 2.4 |
| | C barrier resin to oxygen gas 3 | 13 | | | | |
| | B adhesive resin 2 | 2 | | | | |
| | C barrier resin to oxygen gas 3 | 13 | | | | |
| | E ethylene terpolymer resin | 1 | | | | |

As shown by the results in Table 9, the laminates of the present invention prepared in Examples 16 to 21 had amounts of the laminates which flowed down during molding of 2.4 cm or less and showed excellent molding properties. After the laminates were adhered to blanks of paper, the laminates showed the deviation in thickness of 2.7σ or less and the multi-layer containers were obtained with uniform thickness of the laminates. The adhesive strength between the laminates and the paper substrate was 162 g/15 mm width or more and was sufficient for use as a container. The coefficient of oxygen permeation of the laminate was 2.5 cc/m²·atm·day or less and the barrier property to oxygen was sufficient for use as a packaging material for foods.

In contrast, as shown by the results in Table 10, the laminate of Comparative Example 10 in which layer (E) of an ethylene terpolymer resin had a thickness less than 5 µm had insufficient adhesive strength with the paper substrate. The laminate of Comparative Example 11 in which layer (C) of a barrier resin to oxygen gas had a thickness as small as 1 µm had a great coefficient of oxygen permeation and the barrier property to oxygen gas is insufficient for use as a packaging material for foods. The laminate of Comparative Example 12 in which layer (C) of a barrier resin to oxygen gas was absent and layer (E) of an ethylene terpolymer resin had a thickness as great as 70 µm had a very great coefficient of oxygen permeation and a great amount of the laminate flowed down during molding. The laminates of Comparative Examples 13, 14 and 15 in which the total thickness of the layers of the polypropylene resin was less than 50% of the thickness of the entire laminate did not form sufficiently tense films by the heating and the amount of the laminate which flowed down during molding was great. Thus, these laminates showed poor molding properties. In particular, the laminate of Comparative Example 14 in which the thickness of the layer of the polypropylene resin was as small as about 8% of the thickness of the entire laminate showed very great amount of the laminate which flowed down during molding and a great deviation in thickness after being adhered to the blanks of paper. The laminate of Comparative Example 16 in which layer (E) of an ethylene terpolymer resin had a thickness of 1 µm had an insufficient adhesive strength with the paper substrate. Moreover, due to the thickness of layer (B) of an adhesive resin as small as 2 µm, the laminate of Comparative Example 16 showed a small adhesive strength between layer (A) of a polypropylene resin and layer (C) of a barrier resin to oxygen gas and delamination took place between layer (A) of a polypropylene resin and layer (C) of a barrier resin to oxygen gas.

### Example 22

A laminate having a structure in which 20 µm of layer (A) of polypropylene resin 2 (manufactured by SUMITOMO CHEMICAL Co., Ltd.; SUMITOMO NOBLEN FH1016), 5 µm of layer (B) of adhesive resin 2 (manufactured by MITSUI CHEMICAL Co., Ltd.; ADMER QB550), 5 µm of layer (C) of barrier resin to oxygen gas 2 (manufactured by KURARAY Co., Ltd.; EVAL F101AZ), 5 µm of layer (D) of impact resistant resin 1 (manufactured by UBE KOSAN Co., Ltd.; NYLON 5033B) and 5 µm of layer (E) of an ethylene terpolymer resin (manufactured by NIPPON POLYOLEFIN Co., Ltd.; REXPERL ET182) were laminated in this order was prepared in accordance with the extrusion lamination process. The prepared laminate was integrally laminated to an outer case of a paper substrate (material paper for paper cups) using an air pressure molding machine in a manner such that the layer of an ethylene terpolymer was brought into adhesion with the paper substrate.

The amount of the laminate which flowed down during molding was 2.0 cm. The impact strength of the laminate was 5 kgf·cm/cm². The adhesive strength between the laminate and the paper substrate was 160 g/15 mm width. The coefficient of oxygen permeation of the laminate was 1.5 cc/m²·atm·day.

### Examples 23 to 28

Laminates having the structures shown in Table 11 were prepared and evaluated.

### Comparative Example 17

A laminate having a structure in which 20 µm of layer (A) of polypropylene resin 2 (manufactured by SUMITOMO CHEMICAL Co., Ltd.; SUMITOMO NOBLEN FH1016), 5 µm of layer (B) of adhesive resin 2 (manufactured by MITSUI CHEMICAL Co., Ltd.; ADMER QB550), 5 µm of layer (C) of barrier resin to oxygen gas 2 (manufactured by KURARAY Co., Ltd.; EVAL F101AZ), 5 µm of layer (D) of impact resistant resin 1 (manufactured by UBE KOSAN Co., Ltd.; NYLON 5033B) and 4 µm of layer (E) of an ethylene terpolymer resin (manufactured by NIPPON POLYOLEFIN Co., Ltd.; REXPERL ET182) were laminated in this order was prepared in accordance with the extrusion lamination process. The prepared laminate was integrally laminated to an outer case of a paper substrate (material paper for paper cups) using an air pressure molding machine in a manner such that the layer of an ethylene terpolymer was brought into adhesion with the paper substrate.

The amount of the laminate which flowed down during molding was 2.2 cm. The impact strength of the laminate was 2 kgf·cm/cm². The adhesive strength between the laminate and the paper substrate was 135 g/15 mm width. The coefficient of oxygen permeation of the laminate was 1.2 cc/m²·atm·day.

### Comparative Examples 18 and 19

Laminates having the structures shown in Table 12 were prepared and evaluated.

The results of Examples 22 to 28 are shown in Table 11. The results in Comparative Examples 17 to 19 are shown in Table 12.

**Table 11**

| | Resins constituting laminate | | Amount flowed down during molding (cm) | Deviation in thickness (σ) | Adhegive strength (g/15) mm width | Coefficient of oxygen permeation (cc/m²· atm·day) |
|---|---|---|---|---|---|---|
| | type | thickness (µm) | | | | |
| Example 22 | A polypropylene resin 2 | 20 | 2.0 | 5 | 160 | 1.5 |
| | B adhesive resin 2 | 5 | | | | |
| | C barrier resin to oxygen gas 2 | 5 | | | | |
| | D impact resistant resin 1 | 5 | | | | |
| | E ethylene terpolymer resin | 5 | | | | |
| Example 23 | A polypropylene resin 3 | 60 10 | 1.8 | 13 | 235 | 0.8 |
| | B adhesive resin 2 | | | | | |
| | C barrier resin to oxygen gas 2 | 15 | | | | |
| | D impact resistant resin 1 | 10 | | | | |
| | E ethylene terpolymer resin | 15 | | | | |
| Example 24 | A polypropylene resin 2 | 150 | 2.2 | 18 | 360 | 1.6 |
| | B adhesive resin 2 | 25 | | | | |
| | D impact resistant resin 1 | 30 | | | | |
| | C barrier resin to oxygen gas 3 | 30 | | | | |
| | E ethylene terpolymer resin | 35 | | | | |
| Example 25 | A polypropylene resin 3 | 127 | 0.9 | 10 | 411 | 0.6 |
| | B adhesive resin 2 | 10 | | | | |
| | D impact resistant resin 1 | 15 | | | | |
| | C barrier resin to oxygen gas 2 | 20 | | | | |
| | E ethylene terpolymer resin | 45 | | | | |
| Example 26 | A polypropylene resin 3 | 180 | 2.4 | 12 | 456 | 2.0 |
| | B adhesive resin 2 | 25 | | | | |
| | C barrier resin to oxygen gas 3 | 15 | | | | |
| | D impact resistant resin 1 | 20 | | | | |
| | E ethylene terpolymer resin | 60 | | | | |
| Example 27 | A polypropylene resin 3 | 59 | 1.9 | 0.8 | 203 | 0.9 |
| | B adhesive resin 2 | 10 | | | | |
| | C barrier resin to oxygen gas 2 | 21 | | | | |
| | D impact resistant resin 1 | 3 | | | | |
| | E ethylene terpolymer resin | 16 | | | | |
| Example 28 | A polypropylene resin 3 | 684 | 14.2 | 0.4 | 322 | 0.3 |
| | B adhesive resin 2 | 231 | | | | |
| | C barrier resin to oxygen gas 2 | 156 | | | | |
| | E ethylene terpolymer resin | 33 | | | | |

**Table 12**

| | Resins constituting laminate | | Amount flowed down during molding (cm) | Deviation in thickness (σ) | Adhesive strength (g/15 mm width | Coefficient of oxygen permeation (cc/m²· atm·day) |
|---|---|---|---|---|---|---|
| | type | thickness (µm) | | | | |
| Comparative Example 17 | A polypropylene resin 2 | 20 | 2.2 | 2 | 135 | 1.2 |
| | B adhesive resin 2 | 5 | | | | |
| | C barrier resin to oxygen gas 2 | 5 | | | | |
| | D impact resistant resin 1 | 5 | | | | |
| | E ethylene terpolymer resin | 4 | | | | |
| Comparative Example 18 | A propylene resin 2 | 154 | 12.0 | 32 | 488 | 37.1 |
| | B adhesive resin 2 | 552 | | | | |
| | D impact resistant resin 1 | 110 | | | | |
| | E ethylene terpolymer resin | 69 | | | | |
| Comparative Example 19 | A polypropylene resin 3 | 120 | 9.8 | 11 | 158 | 0.5 |
| | B adhesive resin 2 | 2 | | | | |
| | C barrier resin to oxygen gas 3 | 105 | | | | |
| | D impact resistant resin 1 | 50 | | | | |
| | E ethylene terpolymer resin | 49 | | | | |

As shown by the results in Table 11, the laminates of the present invention prepared in Examples 22 to 28 had the amounts of the laminate which flowed down during molding of 2.4 cm or less and showed excellent molding properties. The adhesive strength between the laminates and the paper substrate was 160 g/15 mm width or more and was sufficient for use as a container. The coefficient of oxygen permeation of the laminate was 2.0 cc/m²·atm·day or less and the barrier property to oxygen was sufficient for use as a packaging material for foods. The laminates of Examples 22 to 26 having layer (D) of an impact resistant resin of a thickness of 5 µm or more had impact strengths of 5 kg·cm/cm² or more and showed excellent impact resistance.

In contrast, as shown by the results in Table 12, the laminate of Comparative Example 17 in which layer (E) of an ethylene terpolymer resin had a thickness less than 5 mm showed insufficient adhesive strength between the laminate and the paper substrate. The laminate of Comparative Example 18 in which layer (C) of a barrier resin to oxygen gas was absent, layer (A) of a polypropylene resin had a thickness 17% of the thickness of the entire laminate and layer (E) of an ethylene terpolymer resin had a thickness as great as 69 µm showed a very great coefficient of oxygen permeation and a great amount of the laminate which flowed down during molding. The laminate of Comparative Example 19 in which layer (A) of a polypropylene resin had a thickness 37% of the thickness of the entire laminate and the layer of an adhesive layer had a thickness of 2 µm did not form sufficiently tense films by heating and the amount of the laminate which flowed down during molding was great. Thus, this laminate had a poor molding property. Moreover, this laminate showed a small adhesive strength between layer (A) of a polypropylene resin and layer (C) of a barrier resin to oxygen gas and delamination took place between layer (A) of a polypropylene resin and layer (C) of a barrier resin to oxygen gas.

### Example 29

A laminate having a structure in which 27 µm of layer (F) of a resin for preserving flavor, 5 µm of layer (B) of adhesive resin 1, 88 µm of layer (A) of polypropylene resin 1, 5 µm of layer (B) of adhesive resin 1, 24 µm of layer (C) of barrier resin to oxygen 1 and 11 µm of layer (E) of an ethylene terpolymer resin were laminated in this order was prepared.

The coefficient of oxygen permeation of the prepared laminate was 0.5 cc/m²·atm·day.

### Examples 30 and 31

Laminates having the structures shown in Table 13 were prepared and evaluated.

### Comparative Examples 20 to 22

Laminates having the structures shown in Table 14 were prepared and evaluated.

### Example 32

A sealed container was prepared using the laminate prepared in Example 29. The prepared sealed container had a coefficient of oxygen permeation of 0.007 cc/package·atm·day. In the test of preservation of flavor, almost no amount of limonene in orange juice was adsorbed to the innermost layer. No change in flavor was found in curry roux. In the test of stability in storage, orange juice showed almost no decrease in the content of vitamin C and taste remained good. Curry roux showed almost no oxidation of the oil components and was suitable as food.

### Examples 33 and 34

Using the laminates prepared in Examples 30 and 31, the test of preservation of flavor and the test of stability in storage were conducted in accordance with the same procedures as those conducted in Example 32.

### Comparative Example 23

A sealed container was prepared using the laminate prepared in Comparative Example 20. The prepared sealed container had a coefficient of oxygen permeation of 11 cc/package·atm·day. In the test of preservation of flavor, a slight amount of limonene in orange juice was adsorbed to the innermost layer. A slight change in flavor was found in curry roux. In the test of stability in storage, orange juice showed a marked decrease in the content of vitamin C and change in taste was found. Curry roux showed marked oxidation of the oil components and unpleasant smell was felt. Thus, this curry roux was not suitable as food.

### Comparative Examples 24 and 25

Using the laminates prepared in Comparative Examples 21 and 22, the test of preservation of flavor and the test of stability in storage were conducted in accordance with the same procedures as those conducted in Example 32.

The results of Examples 29 to 31 are shown in Table 13. The results of Comparative Examples 20 to 22 are shown in Table 14. The results of Examples 32 to 34 and Comparative Examples 23 to 25 are shown in Table 15.

**Table 13**

| | Resins constituting laminate | | Coefficient of oxygen permeation (cc/m²·atm·day) |
|---|---|---|---|
| | type | thickness (µm) | |
| Example 29 | F resin for preserving flavor | 27 | 0.5 |
| | B adhesive resin 1 | 5 | |
| | A polypropylene resin 1 | 88 | |
| | B adhesive resin 1 | 5 | |
| | C barrier resin to oxygen gas 1 | 24 | |
| | E ethylene terpolymer resin | 11 | |
| Example 30 | F resin for preserving flavor | 32 | 0.6 |
| | B adhesive resin 1 | 5 | |
| | A polypropylene resin 1 | 88 | |
| | B adhesive resin 1 | 5 | |
| | C barrier resin to oxygen gas 1 | 19 | |
| | E ethylene terpolymer resin | 11 | |
| Example 31 | F resin for preserving flavor | 24 | 0.4 |
| | B adhesive resin 1 | 5 | |
| | A polypropylene resin 1 | 40 | |
| | B adhesive resin 1 | 5 | |
| | C barrier resin to oxygen gas 1 | 24 | |
| | B adhesive resin 1 | 5 | |
| | A polypropylene resin 1 | 46 | |
| | E ethylene terpolymer resin | 11 | |

**Table 14**

| | Resins constituting laminate | | Coefficient of oxygen permeation (cc/m²·atm·day) |
|---|---|---|---|
| | type | thickness (µm) | |
| Comparative Example 20 | A polypropylene resin 1 | 83 | 620 |
| | B adhesive resin 1 | 5 | |
| | A polypropylene resin 1 | 56 | |
| | B adhesive resin 1 | 5 | |
| | E ethylene terpolymer resin | 11 | |
| Comparative Example 21 | A polypropylene resin 1 | 104 | 710 |
| | B adhesive resin 1 | 8 | |
| | A polypropylene resin 1 | 24 | |
| | E ethylene terpolymer resin | 24 | |
| Comparative Example 22 | A polypropylene resin 1 | 64 | 600 |
| | B adhesive resin 1 | 5 | |
| | A polypropylene resin 1 | 24 | |
| | B adhesive resin 1 | 5 | |
| | A polypropylene resin 1 | 43 | |
| | B adhesive resin 1 | 8 | |
| | E ethylene terpolymer resin | 11 | |

**Table 15**

| | Laminate used for sealed container | Coefficient of oxygen permeation (cc/package· atm·day) | preservation of flavor | | stability in storage | |
|---|---|---|---|---|---|---|
| | | | orange juice | curry roux | orange juice | curry roux |
| Example 32 | laminate of Example 29 | 0.007 | good | good | good | good |
| Example 33 | laminate of Example 30 | - | good | good | good | good |
| Example 34 | laminate of Example 31 | - | good | good | good | good |
| Comparative Example 23 | laminate of Comparative Example 20 | 11 | fair | fair | poor | poor |
| Comparative Example 24 | laminate of Comparative Example 21 | - | poor | poor | poor | poor |
| Comparative Example 25 | laminate of Comparative Example 22 | - | fair | fair | fair | fair |

As shown by the results in Tables 13 and 14, the laminates of Examples 29 to 31 had small coefficients of oxygen permeation and showed excellent barrier properties to oxygen gas. In contrast, the laminates of Comparative Examples 20 to 22 having no layers of a barrier resin to oxygen gas had great coefficients of oxygen permeation and showed poor barrier properties to oxygen gas. As shown by the results in Table 15, the coefficients of oxygen permeation of the sealed containers directly reflected the coefficients of oxygen permeation of the corresponding laminates. The sealed container of Example 32 prepared using the laminate prepared in Example 29 showed an excellent barrier property to oxygen gas.

As shown by the results in Table 15, the laminates used for the sealed containers of Examples 32 to 34 had the layer for preserving flavor and the layer of a barrier resin to oxygen gas and the containers showed, as containers for foods, excellent preservation of flavor and an excellent property in storage of foods. In contrast, the sealed containers of Comparative Examples 23 to 25 which were prepared without using the layer for preserving flavor or the layer of a barrier resin to oxygen gas showed markedly inferior preservation of flavor and a markedly inferior property in storage of foods.

## Claims

1. A laminate of synthetic resins comprising at least four layers comprising layer (A) of a polyolefin resin, layer (B) of an adhesive resin, layer (C) of a barrier resin to oxygen gas and layer (E) of an ethylene terpolymer resin, wherein a thickness of layer (A) of a polyolefin resin is 50% or more of a thickness of the entire laminate of synthetic resins, a thickness of layer (B) of an adhesive resin is 3 µm or more, a thickness of layer (C) of a barrier resin to oxygen gas is 5 µm or more, a thickness of layer (E) of an ethylene terpolymer resin is in a range of 5 to 60 µm and an adhesive strength between layer (E) of an ethylene terpolymer resin and paper substrate (G) is 150 g/15 mm width or more as measured by 180 degree peeling at a peeling speed of 300 mm/mm.

2. A laminate according to Claim 1, which further comprises layer (D) of an impact resistant resin having a thickness of 5 µm or more.

3. A laminate according to Claim 1, which further comprises layer (F) of a resin for preserving flavor.

4. A laminate according to Claim 1, wherein the barrier resin to oxygen gas forming layer (C) has a coefficient of oxygen permeation of 20 cc·100 µm/m²·atm·day or less at 23°C in 65% RH.

5. A laminate according to Claim 2, wherein the impact resistant resin forming layer (D) is a polyamide resin.

6. A laminate according to Claim 1, wherein layer (A) of a polyolefin resin comprises a resin layer for sealing which can be easily detached, the resin layer for sealing comprises a sealing layer comprising a mixture of 20 to 90% by weight of a polyethylene resin and 10 to 80% by weight of a polypropylene resin and a ratio of a melt flow rate of the polyethylene resin to a melt flow rate of the polypropylene resin is 0.5 to 20.

7. A laminate according to Claim 1, which has a structure comprising at least four layers comprising layer (A) of a polyolefin resin, layer (B) of an adhesive resin, layer (C) of a barrier resin to oxygen gas and layer (E) of an ethylene terpolymer resin which are laminated in an order of layers (A), (B), (C) and (E).

8. A laminate according to Claim 2, which has a structure comprising at least five layers comprising layer (A) of a polyolefin resin, layer (B) of an adhesive resin, layer (C) of a barrier resin to oxygen gas, layer (D) of an impact resistant resin and layer (E) of an ethylene terpolymer resin which are laminated in an order of layers (A), (B), (C), (D) and (E) or in an order of layers (A), (B), (D), (C) and (E).

9. A laminate according to Claim 3, which has a structure comprising at least five layers comprising layer (F) of a resin for preserving flavor, layer (A) of a polyolefin resin, layer (B) of an adhesive resin, layer (C) of a barrier resin to oxygen gas and layer (E) of an ethylene terpolymer resin which are laminated in an order of layers (F), (A), (B), (C) and (E).

10. A multi-layer container comprising a laminate described in any of Claims 1 to 9 as an inner layer and paper substrate (G) as an outer layer, wherein layer (E) of an ethylene terpolymer resin in the laminate and paper substrate (G) are adhered together and the laminate and paper substrate (G) are formed to a shape of the container.

11. A sealed container comprising a cap having a barrier property to oxygen gas and a multi-layer container described in Claim 10, wherein the cap is sealed to the laminate of the multi-layer container at peripheral portions of an opening of the multi-layer container.
